# EUROPÄISCHE PATENTSCHRIFT

(11) **EP 3 501 928 B1**
(45) Veröffentlichungstag und Bekanntmachung des Hinweises auf die Patenterteilung: **18.12.2019**
(21) Anmeldenummer: 18211324.1
(22) Anmeldetag: 10.12.2018
(51) Int. Cl.: B60W 10/06, B60W 10/08, B60W 10/02, B60W 10/113, B60K 6/48, B60W 20/30, B60W 20/19, B60W 30/19, B60W 50/00, F16H 61/688, F16H 3/00, F16D 48/06, F16D 13/38

(54) **VERFAHREN ZUM BETREIBEN EINES HYBRID-ANTRIEBSSTRANGES SOWIE HYBRID-ANTRIEBSSTRANG FÜR EIN KRAFTFAHRZEUG**
METHOD FOR OPERATING A HYBRID DRIVE TRAIN AND HYBRID DRIVE TRAIN FOR A MOTOR VEHICLE
PROCÉDÉ DE FONCTIONNEMENT D'UNE CHAÎNE CINÉMATIQUE HYBRIDE AINSI QUE CHAÎNE CINÉMATIQUE HYBRIDE POUR UN VÉHICULE AUTOMOBILE

(30) Priorität: 20.12.2017 DE 102017130707
(43) Veröffentlichungstag der Anmeldung: 26.06.2019
(73) Patentinhaber: Magna PT B.V. & Co. KG, 74199 Untergruppenbach (DE)
(72) Erfinder: KNÖPFLE, Phillipp, 71636 Ludwigsburg (DE); STEPPER, Thorsten, 74638 Waldenburg (DE)
(74) Vertreter: Rausch, Gabriele

(56) Entgegenhaltungen:
- EP-A2- 2 765 338
- WO-A1-2008/031389
- DE-A1-102010 044 618
- DE-A1-102012 218 120

## Beschreibung

Die vorliegende Erfindung betrifft ein Verfahren zum Betreiben eines Hybrid-Antriebsstranges eines Kraftfahrzeuges, wobei der Hybrid-Antriebsstrang eine erste Antriebseinheit, insbesondere in Form eines Verbrennungsmotors, eine zweite Antriebseinheit, insbesondere in Form einer elektrischen Maschine, und ein Doppelkupplungsgetriebe aufweist, wobei das Doppelkupplungsgetriebe einen ersten Leistungsübertragungspfad mit einer ersten Reibkupplung und einem ersten Teilgetriebe sowie einen zweiten Leistungsübertragungspfad mit einer zweiten Reibkupplung und einem zweiten Teilgetriebe aufweist, wobei die erste Antriebseinheit an ein Eingangsglied der ersten Reibkupplung und an ein Eingangsglied der zweiten Reibkupplung gekoppelt ist und wobei die zweite Antriebseinheit an ein Ausgangsglied der zweiten Reibkupplung gekoppelt ist.

Ein derartiger Antriebsstrang ist beispielsweise bekannt aus dem Dokument DE 10 2012 018 416 A1.

Kraftfahrzeug-Antriebsstränge mit Doppelkupplungsgetriebe sind allgemein bekannt. Das Doppelkupplungsgetriebe weist zwei Teilgetriebe auf, von denen eines in der Regel den geraden Gangstufen und das andere den ungeraden Gangstufen zugeordnet ist. Jeweils eines der Teilgetriebe ist aktiv und dient zur Leistungsübertragung. Im anderen Teilgetriebe kann eine Gangstufe vorgewählt werden, die als nächstes zu verwenden ist. Ein Gangwechsel erfolgt dann durch überschneidende Betätigung der zwei Reibkupplungen, so dass die Leistung von dem einen Leistungsübertragungspfad auf den anderen Leistungsübertragungspfad übergeben wird.

Hybrid-Antriebsstränge mit derartigen Doppelkupplungsgetrieben können eine elektrische Maschine aufweisen, die mit einem Eingangsglied der zwei Reibkupplungen verbunden ist. Bevorzugt ist jedoch die vorliegende Variante, bei der die elektrische Maschine, die als Antriebseinheit dient, an ein Ausgangsglied einer der zwei Reibkupplungen gekoppelt ist. Mit einem derartigen Hybrid-Antriebsstrang sind eine Vielzahl von Betriebsweisen realisierbar. Zum einen ist ein rein verbrennungsmotorischer Betrieb möglich, bei dem das Doppelkupplungsgetriebe in an sich bekannter, oben beschriebener Art und Weise betrieben wird. Dabei kann ggf. zusätzliche Antriebsleistung mittels der elektrischen Maschine bereitgestellt werden (sogenannter Boost-Betrieb). Ferner ist ein rein elektromotorischer Betrieb möglich. Hierbei wird die zweite Reibkupplung geöffnet und elektrische Antriebsleistung wird über das zweite Teilgetriebe auf den Abtrieb geleitet. Zudem ermöglicht ein derartiger Antriebsstrang ein Starten des Verbrennungsmotors mittels der elektrischen Maschine im Stand, wozu die zweite Reibkupplung geschlossen wird, die erste Reibkupplung geöffnet wird und in dem zweiten Teilgetriebe eine Neutralstellung hergestellt wird, also keine Gangstufe eingelegt ist. In manchen Situationen ist auch ein sogenanntes Standladen möglich, bei dem während des Stillstands des Fahrzeugs bei Neutralstellung in dem zweiten Teilgetriebe Antriebsleistung der ersten Antriebseinheit über die zweite Reibkupplung zu der zweiten Antriebseinheit geführt wird, um über die zweite Antriebseinheit, die in diesem Fall als elektrischer Generator arbeitet, Ladeleistung hin zu einer Batterie zu übertragen.

Bei einem rein elektrischen Fahrbetrieb können sämtliche Gangstufen des zweiten Teilgetriebes verwendet werden. In der Regel ist hierbei jedoch ein Gangwechsel mit einer Zugkraftunterbrechung verbunden, da die zweite Reibkupplung im rein elektrischen Fahrbetrieb in der Regel geöffnet ist, um den Verbrennungsmotor nicht mitschleppen zu müssen.

Ferner versteht sich bei einem derartigen Hybrid-Antriebsstrang, dass auch eine rekuperierende Betriebsweise möglich ist, bei der im Schubbetrieb die elektrische Maschine (zweite Antriebseinheit) als Generator arbeitet, wobei in dem zweiten Teilgetriebe eine geeignete Gangstufe geschaltet ist und wobei die zweite Reibkupplung vorzugsweise geöffnet ist.

Wenn ein Kraftfahrzeug, das mit einem derartigen Hybrid-Antriebsstrang ausgestattet ist, für eine längere Zeit stark zu beschleunigen ist, beispielsweise auf einer Auffahrt zu einer Autobahn oder einem Highway, ist es bevorzugt, wenn ein sogenannter Boost-Betrieb eingerichtet wird. Hierbei wird Antriebsleistung sowohl von der ersten Antriebseinheit als auch von der zweiten Antriebseinheit bereitgestellt. Da hierbei in der Regel von einer niedrigen Fahrgeschwindigkeit ausgegangen wird, sind folglich in den Teilgetrieben in der Regel auch niedrige Gangstufen eingelegt. Wenn beispielsweise in dem ersten Teilgetriebe, über das die Antriebsleistung der ersten Antriebseinheit übertragen wird, die Gangstufe 3 eingelegt ist, kann beispielsweise in dem zweiten Teilgetriebe die Gangstufe 2 eingelegt sein. Ein fortgesetzter Beschleunigungsvorgang kann es dann erfordern, dass in dem zweiten Teilgetriebe auf die höhere Gangstufe zu schalten ist, um eine Anpassung an die höheren Drehzahlen am Abtrieb zu erreichen. Hierbei ist die elektrische Maschine kurzfristig auf ein Drehmoment von null zu regeln, um den Schaltvorgang in dem zweiten Teilgetriebe durchführen zu können. Dies führt zu einem nicht unerheblichen Leistungseinbruch bzw. Einbruch der Zugkraft. Dies ist in der Regel jedenfalls dann für einen Führer eines Kraftfahrzeuges zu spüren, wenn die von der zweiten Antriebseinheit bereitgestellte Antriebsleistung nicht sehr viel kleiner ist als die von der ersten Antriebseinheit bereitgestellte Leistung. Beispielsweise stellt sich dieses Problem bei solchen Hybrid-Antriebssträngen, bei denen das Verhältnis von Maximalleistung der ersten Antriebseinheit zu Maximalleistung der zweiten Antriebseinheit in einem Bereich von 3:1 bis 1:2 liegt.

WO2008/031389A1 zeigt ein Verfahren zum Betreiben eines Hybridantriebsstrangs, der eine Verbrennungsmaschine und eine elektrische Maschine als Antriebe und ein Parallelschaltgetriebe mit einer ersten Getriebeeingangswelle, einer zweiten Getriebeeingangswelle und einer Getriebeausgangswelle aufweist, wobei die erste Getriebeeingangswelle über mindestens einen ersten Gang und die zweite Getriebeeingangswelle über mindestens zwei zweite Gänge mit der Getriebeausgangswelle koppelbar ist, wobei die Verbrennungsmaschine über eine erste Kupplung mit der ersten Getriebeeingangswelle und über eine zweite Kupplung mit der zweiten Getriebeeingangswelle in Wirkverbindung bringbar ist, und wobei die elektrische Maschine mit der zweiten Getriebeeingangswelle in Antriebsverbindung steht. Einlegen eines ersten Gangs. Mittels der Verbrennungsmaschine wird über die erste Kupplung ein Drehmoment an die erste Getriebeeingangswelle angelegt. Einlegen eines zweiten Gangs. Mittels der elektrischen Maschine wird ein Drehmoment an die Getriebeausgangswelle angelegt. Das über die erste Kupplung übertragene Drehmoment wird durch Aufbauen von Kupplungsschlupf reduziert, während das Drehmoment der elektrischen Maschine erhöht wird. Das Drehmoment der elektrischen Maschine wird auf null reduziert und es wird ein zweiter Gang eingelegt, während das über die erste Kupplung übertragene Drehmoment durch Reduzieren des Schlupfs an der ersten Kupplung erhöht wird. Mittels der elektrischen Maschine wird ein Drehmoment auf die Getriebeausgangswelle übertragen. Das Drehmoment der elektrischen Maschine wird auf null reduziert damit die Elektro-Gangstufe lastfrei geschaltet werden kann. Das Füllmoment wird durch einen Drehmomentreserve des Verbrennungsmotors mittels Schlupfregelung der ersten Kupplung geliefert.

Es ist vor diesem Hintergrund eine Aufgabe der Erfindung, ein verbessertes Verfahren zum Betreiben eines Hybrid-Antriebsstranges sowie einen verbesserten Hybrid-Antriebsstrang für ein Kraftfahrzeug anzugeben.

Die obige Aufgabe wird gelöst gemäß Anspruch 1 durch ein Verfahren zum Betreiben eines Hybrid-Antriebsstranges eines Kraftfahrzeuges, wobei der Hybrid-Antriebsstrang eine erste Antriebseinheit, insbesondere in Form eines Verbrennungsmotors, eine zweite Antriebseinheit, insbesondere in Form einer elektrischen Maschine, und ein Doppelkupplungsgetriebe aufweist, wobei das Doppelkupplungsgetriebe einen ersten Leistungsübertragungspfad mit einer ersten Reibkupplung und einem ersten Teilgetriebe sowie einen zweiten Leistungsübertragungspfad mit einer zweiten Reibkupplung und einem zweiten Teilgetriebe aufweist, wobei die erste Antriebseinheit an ein Eingangsglied der ersten Reibkupplung und an ein Eingangsglied der zweiten Reibkupplung gekoppelt ist, und wobei die zweite Antriebseinheit an ein Ausgangsglied der zweiten Reibkupplung gekoppelt ist, wobei das Verfahren dazu dient, Zugkraft zum Beschleunigen des Kraftfahrzeuges bereitzustellen, und die folgenden Schritte aufweist:
Bereitstellen von erster Antriebsleistung durch die erste Antriebseinheit und Übertragen der ersten Antriebsleistung über die erste Reibkupplung und das erste Teilgetriebe hin zu einem Abtrieb des Hybrid-Antriebsstranges, wobei in dem ersten Teilgetriebe eine erste Verbrenner-Gangstufe geschaltet ist, und gleichzeitiges Bereitstellen von zweiter Antriebsleistung durch die zweite Antriebseinheit über das zweite Teilgetriebe hin zu dem Abtrieb, wobei die zweite Reibkupplung geöffnet ist und wobei in dem zweiten Teilgetriebe eine erste Elektro-Gangstufe geschaltet ist, die niedriger ist als die erste Verbrenner-Gangstufe,
Ermitteln, ob ein Gangwechsel im zweiten Teilgetriebe von der ersten Elektro-Gangstufe in eine zweite Elektro-Gangstufe erforderlich wird, und, falls ja,
Schalten des ersten Teilgetriebes von der ersten Verbrenner-Gangstufe, in eine zweite, höhere Verbrenner-Gangstufe,
Schalten des zweiten Teilgetriebes in Neutral und Übertragen von Antriebsleistung der zweiten Antriebseinheit über die zweite Reibkupplung und die erste Reibkupplung sowie über das erste Teilgetriebe zu dem Abtrieb, und
Schalten des zweiten Teilgetriebes in die zweite Elektro-Gangstufe.

Ferner wird die obige Aufgabe gelöst durch einen Hybridantriebsstrang für ein Kraftfahrzeug, wobei der Hybridantriebsstrang eine erste Antriebseinheit, eine zweite Antriebseinheit und ein Doppelkupplungsgetriebe aufweist, wobei das Doppelkupplungsgetriebe einen ersten Leistungsübertragungspfad mit einer ersten Reibkupplung und einem ersten Teilgetriebe sowie einen zweiten Leistungsübertragungspfad mit einer zweiten Reibkupplung und einem zweiten Teilgetriebe aufweist, wobei die erste Antriebseinheit an ein Eingangsglied der ersten Reibkupplung und an ein Eingangsglied der zweiten Reibkupplung gekoppelt ist und wobei die zweite Antriebseinheit an ein Ausgangsglied der zweiten Reibkupplung gekoppelt ist, und wobei der Hybrid-Antriebsstrang eine Steuereinrichtung aufweist, die dazu eingerichtet ist, das Verfahren der erfindungsgemäßen Art durchzuführen.

Bei dem erfindungsgemäßen Verfahren beinhaltet der Schritt des Ermittelns, ob ein Gangwechsel in dem zweiten Teilgetriebe von der ersten Elektro-Gangstufe in die zweite Elektro-Gangstufe erforderlich wird, eine Prädiktionsermittlung. Denn es wird prädiktiv ermittelt bzw. festgestellt, dass, zumindest mit großer Wahrscheinlichkeit, der Beschleunigungsvorgang zum Bereitstellen von Zugkraft sich soweit fortsetzen wird, dass in dem zweiten Teilgetriebe der Gangwechsel in die höhere Gangstufe erforderlich ist, um nach wie vor für den fortgesetzten Beschleunigungsvorgang einen Boost-Betrieb einrichten zu können.

Wenn diese Situation prädiktiv erkannt bzw. ermittelt worden ist, wird rechtzeitig vorher in dem ersten Teilgetriebe in eine höhere Gangstufe geschaltet. Dieser Schaltvorgang kann dabei in an sich bekannter Weise erfolgen, indem die Drehzahl des Verbrennungsmotors durch teilweises Öffnen der ersten Reibkupplung erhöht wird und anschließend eine überschneidende Betätigung der zwei Reibkupplungen erfolgt. Dabei wird Antriebsleistung der ersten Antriebseinheit zumindest für einen kurzen Zeitraum über den zweiten Leistungsübertragungspfad übertragen.

Hierdurch wird zwar in dem ersten Teilgetriebe die Übersetzung erhöht, so dass die von der ersten Antriebseinheit über den ersten Leistungsübertragungspfad bereitstellbare Leistung im Anschluss mit einem geringeren Drehmoment erfolgen wird. Bei drehmomentstarken ersten Antriebseinheiten kann jedoch über einen relativ großen Drehzahlbereich ein relativ hohes Drehmoment bereitgestellt werden, so dass dieses Hochschalten nicht oder nur wenig merkbar durchgeführt werden kann.

Ferner ist es nun vorteilhaft, dass für den Gangwechsel in dem zweiten Teilgetriebe, der ja aufgrund der prädiktiven Erkennung notwendig ist, nun über die höhere Verbrenner-Gangstufe eine Art Zugkraftunterstützung bereitgestellt werden kann, während in dem zweiten Teilgetriebe zunächst auf Neutral geschaltet wird und anschließend in die zweite Elektro-Gangstufe geschaltet wird. Hierbei wird Antriebsleistung der zweiten Antriebseinheit über die zweite Reibkupplung und über die erste Reibkupplung sowie über das erste Teilgetriebe zu dem Abtrieb übertragen, zusätzlich zu der von der ersten Antriebseinheit bereitgestellten Antriebsleistung.

Das zweite Teilgetriebe kann hierdurch entlastet werden und es kann ein Schalten in die zweite Elektro-Gangstufe erfolgen, so dass der Boost-Betrieb anschließend fortgesetzt werden kann, wofür in der Regel die zweite Reibkupplung wieder geöffnet wird. Bei den obigen Leistungsflüssen werden die zwei Reibkupplungen zur Drehzahlanpassung ggf. schlupfend betrieben.

Durch die Maßnahme, in dem ersten Teilgetriebe eine höhere Gangstufe als die zweite Elektro-Gangstufe einzulegen, kann der Schaltvorgang in dem zweiten Teilgetriebe mit einer geringen Zugkraftunterbrechung durchgeführt werden.

Obgleich die Gangstufen des zweiten Teilgetriebes, bei denen Antriebsleistung der zweiten Antriebseinheit über das zweite Teilgetriebe übertragen wird, vorliegend als Elektro-Gangstufen bezeichnet sind, versteht sich, dass die zweite Antriebseinheit nicht notwendigerweise eine elektrische Maschine ist, sondern auch durch eine andere Art von Antriebseinheit realisiert sein kann, beispielsweise durch einen Verbrennungsmotor. In gleicher Weise ist der Begriff der Verbrenner-Gangstufe für Gangstufen in dem ersten Teilgetriebe, bei denen Antriebsleistung der ersten Antriebseinheit über das erste Teilgetriebe übertragen wird, nicht einschränkend zu verstehen. Die erste Antriebseinheit kann nichtsdestotrotz beispielsweise eine elektrische Maschine sein.

Das erste Teilgetriebe weist vorzugsweise ungerade Gangstufen auf, und das zweite Teilgetriebe weist vorzugsweise gerade Vorwärtsgangstufen auf. Dies kann jedoch auch genau umgekehrt sein.

Insgesamt kann mit dem erfindungsgemäßen Verfahren folglich zumindest teilweise ein Beschleunigungseinbruch bzw. eine Reduzierung des Drehmomentes am Abtrieb verhindert werden. Insgesamt kann dies folglich zu einer Verbesserung der Fahrbarkeit führen.

Bei dem erfindungsgemäßen Verfahren wird insgesamt durch eine prädiktive Fahrsituationserkennung eine Vorbereitung des Schaltens im zweiten Teilgetriebe während eines Beschleunigungsvorganges mit Boost-Betrieb vorbereitet, um auch während des Gangwechsels in dem zweiten Teilgetriebe weiter aktiv boosten zu können. Hierdurch kann ein deutlicher Beschleunigungseinbruch verhindert werden.

Vorzugsweise erfolgt die Ermittlung, ob ein Gangwechsel notwendig ist, aufgrund einer Mehrzahl von Parametern, beispielsweise dadurch, dass über eine Navigationsanalyse eine Autobahnauffahrt erkannt wird oder eine ähnliche Situation. Ferner können prädiktiv Beschleunigungsvorgänge wie beispielsweise Überholvorgänge von längeren Fahrzeugen erfasst werden, wie beispielsweise von LKWs. Zudem kann erfasst werden, ob ein Fahrpedal beispielsweise zu mehr als 90% durchgedrückt wird, nach der Art eines Kick-Down. Diese Parameter können jeweils einzeln oder in einer beliebigen Kombination dazu verwendet werden, um die Gangwechselnotwendigkeit prädiktiv zu ermitteln.

Insbesondere wird das vorliegende Verfahren angewendet, wenn das Verhältnis der maximalen Antriebsleistung der ersten Antriebseinheit zu der maximalen Antriebsleistung der zweiten Antriebseinheit in einem Bereich von 3:1 bis 1:2 liegt, und/oder dann, wenn die zweite Antriebseinheit eine maximale Antriebsleistung von mehr als 30 kW hat, insbesondere mehr als 40 kW, und vorzugsweise mehr als 50 kW.

Die erste Elektro-Gangstufe ist in dem zweiten Teilgetriebe vorzugsweise die niedrigste Vorwärtsgangstufe. Ferner versteht sich, dass die Gangstufen des ersten und des zweiten Teilgetriebes zum Durchführen von klassischen Doppelkupplungsgetriebe-Schaltungen aufeinander abgestimmt sind, wobei das erste Teilgetriebe, wie oben erwähnt, vorzugsweise die geraden Gangstufen beinhaltet und das erste Teilgetriebe vorzugsweise die ungeraden Gangstufen.

Die erste Antriebseinheit ist an die Eingangsglieder der ersten und der zweiten Reibkupplung gekoppelt. Vorzugsweise ist dies eine feste Drehkopplung mit einer festen Übersetzung. Generell kann jedoch die Kopplung auch über eine schaltbare Kupplung erfolgen. In ähnlicher Weise ist die zweite Antriebseinheit an ein Ausgangsglied der zweiten Reibkupplung gekoppelt. Diese Kopplung kann eine feste Drehkopplung sein, beispielsweise mit einer festen Übersetzung. Die Kopplung kann beispielsweise dadurch erfolgen, dass die zweite Antriebseinheit über einen Stirnradsatz an den Eingang des zweiten Teilgetriebes angeschlossen ist, beispielsweise an einen Radsatz des zweiten Teilgetriebes. Folglich kann auch die zweite Antriebseinheit entweder mit einem festen Übersetzungsverhältnis mit dem Ausgangsglied der zweiten Reibkupplung bzw. mit dem Eingang des zweiten Teilgetriebes gekoppelt bzw. drehgekoppelt sein. Alternativ kann diese Kopplung jedoch auch über eine schaltbare Kupplung wie beispielsweise eine Schaltkupplung des zweiten Teilgetriebes erfolgen.

Die Aufgabe wird vollkommen gelöst.

Gemäß einer bevorzugten Ausführungsform wird nach dem Schritt c) das erste Teilgetriebe von der zweiten Verbrenner-Gangstufe in eine niedrigere Verbrenner-Gangstufe geschaltet.

Dies kann insbesondere die erste Verbrenner-Gangstufe sein, also jene, die zu Beginn des Verfahrens in dem ersten Teilgetriebe geschaltet war.

Hierdurch kann nun für den weiteren Verlauf des Beschleunigungsvorganges wiederum ein erhöhtes Drehmoment über die niedrigere Verbrenner-Gangstufe bereitgestellt werden.

Das Herunterschalten in dem ersten Teilgetriebe dient folglich vorzugsweise dazu, wieder mehr Zugkraft zu bekommen.

Gemäß einer weiteren bevorzugten Ausführungsform wird vor dem Schritt a) die erste Reibkupplung zumindest teilweise geöffnet und/oder die zweite Reibkupplung wird zumindest teilweise geschlossen, um den Schaltvorgang in dem ersten Teilgetriebe zu unterstützen.

Insbesondere kann hierbei durch teilweises Öffnen der ersten Reibkupplung eine Drehzahlerhöhung der ersten Antriebseinheit angeregt werden, um eine Drehzahlanpassung an die Drehzahl des Eingangs des zweiten Teilgetriebes bei der dort geschalteten ersten Elektro-Gangstufe zu erreichen. Anschließend können die Reibkupplungen überschneidend betätigt werden, um anschließend die zweite Verbrenner-Gangstufe einlegen zu können.

Ferner ist es insgesamt vorteilhaft, wenn die erste Reibkupplung vor dem Schritt b) wieder zumindest teilweise geschlossen wird, um nach dem Schalten des zweiten Teilgetriebes in Neutral dann Antriebsleistung der ersten Antriebseinheit über die erste Reibkupplung und das erste Teilgetriebe zu dem Abtrieb übertragen zu können.

Insbesondere wird die erste Reibkupplung vor dem Schalten des zweiten Teilgetriebes in Neutral zumindest wieder teilweise geschlossen, wohingegen die zweite Reibkupplung teilweise geöffnet wird, um eine Lastfreiheit im Bereich einer Schaltkupplung der ersten Elektro-Gangstufe zu erreichen, so dass die erste Elektro-Gangstufe ausgelegt werden kann.

Von besonderem Vorzug ist es ferner, wenn die zweite Reibkupplung nach dem Schritt c) geöffnet wird.

Hierdurch ist es möglich, nach dem Schritt c) wieder einen regulären Boost-Betrieb durchzuführen, bei dem Antriebsleistung der zweiten Antriebseinheit ausschließlich über das zweite Teilgetriebe und die zweite Elektro-Gangstufe zu dem Abtrieb übertragen wird.

Ferner ist es insgesamt vorteilhaft, wenn der Schritt b) dadurch unterstützt wird, dass eine Aktuatorik eine Schaltkupplung zum Auslegen der ersten Elektro-Gangstufe in Auslegerichtung vorspannt, so dass das Auslegen erfolgt, sobald die Schaltkupplung im Wesentlichen lastfrei wird.

Hierdurch kann der gesamte Schaltvorgang zeitlich verkürzt werden.

Zum Einlegen der zweiten Elektro-Gangstufe im Schritt c) ist eine relativ genaue Regelung der Drehzahl in dem zweiten Teilgetriebe notwendig.

Das Einlegen kann dabei durch eine definierte angeregte Oszillation der Eingangswelle des zweiten Teilgetriebes verbessert werden. Hierbei wird durch Betätigung der zweiten Reibkupplung oder durch eine Regelung der zweiten Antriebseinheit eine solche Oszillation angeregt. Insbesondere für die sogenannte Freiflugphase des Schaltens in die zweite Elektro-Gangstufe kann eine solche Oszillation dazu dienen, Einlegeschläge bzw. Schaltschläge zu vermeiden.

Die Freiflugphase ist bei einer Synchron-Schaltkupplung, wie sie vorliegend generell zum Schalten von Gangstufen in den Teilgetrieben verwendet wird, eine solche Phase, bei der ein Sperrring umschlägt, um ein Durchschalten einer Schaltmuffe zu ermöglichen. Während dieser "Phase" sind Eingangsglied und Ausgangsglied dieser Schaltkupplung voneinander entkoppelt, so dass wieder eine Differenzdrehzahl entstehen kann, wenn ein gewisses Drehmoment anliegt.

Die Aktuatorik, die zum Schalten von Gangstufen in dem ersten Teilgetriebe und in dem zweiten Teilgetriebe verwendet wird, kann durch eine hydraulische Aktuatorik realisiert sein. Bevorzugt ist jedoch jedem Teilgetriebe wenigstens eine elektromotorisch angetriebene Schaltwalze zugeordnet, die mit den Schaltkupplungen dieses Teilgetriebes zusammenwirkt.

Sofern vorliegend von einem teilweisen Öffnen oder Schließen einer Reibkupplung gesprochen wird, soll sich dies insbesondere auf einen schlupfenden Betriebszustand beziehen.

Ausführungsbeispiele der Erfindung sind in der Zeichnung dargestellt und werden in der nachfolgenden Beschreibung näher erläutert. Es zeigen:
Fig. 1 eine schematische Darstellung eines Hybrid-Antriebsstranges in einem Boost-Betrieb;
Fig. 2 den Hybrid-Antriebsstrang der Fig. 1 nach einem Schalten des ersten Teilgetriebes in eine höhere Verbrenner-Gangstufe und nach dem Schalten des zweiten Teilgetriebes in Neutral; und
Fig. 3 den Antriebsstrang der Fig. 1 in einem fortgesetzten Boost-Betrieb mit geschalteter zweiter Elektro-Gangstufe;
Fig. 4 ein Zeitablaufdiagramm von verschiedenen Drehmomenten, Drehzahlen und Schaltzuständen in dem Hybrid-Antriebsstrang der Fig. 1 bei Durchführung einer Ausführungsform des erfindungsgemäßen Verfahrens; und
Fig. 5 ein schematisches Flussdiagramm zur Erläuterung einer Ausführungsform des erfindungsgemäßen Verfahrens.

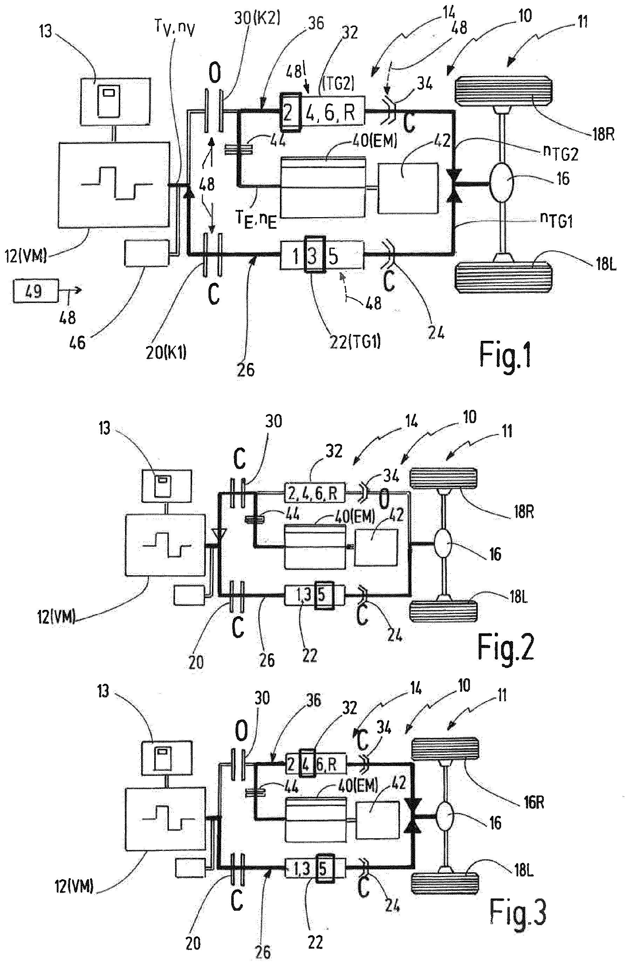

In Fig. 1 ist in schematischer Form ein Hybrid-Antriebsstrang 10 für ein schematisch angedeutetes Kraftfahrzeug 11 dargestellt. Der Hybrid-Antriebsstrang 10 beinhaltet eine erste Antriebseinheit 12 in Form eines Verbrennungsmotors, der an einen Tank 13 angeschlossen ist. Ferner weist der Hybrid-Antriebsstrang ein Doppelkupplungsgetriebe 14 auf. Antriebsleistung der ersten Antriebseinheit 12 kann über das Doppelkupplungsgetriebe 14 hin zu einem Abtrieb in Form eines Differentials 16 übertragen werden. Das Differential 16 dient dazu, Antriebsleistung auf angetriebene Räder 18L, 18R des Kraftfahrzeuges 11 zu verteilen.

Das Doppelkupplungsgetriebe 14 weist eine erste Reibkupplung 20 (K1) auf, deren Eingangsglied mit der ersten Antriebseinheit 12 drehgekoppelt ist. Ein Ausgangsglied der ersten Reibkupplung 20 ist mit einem Eingang eines ersten Teilgetriebes 22 (TG1) verbunden, das ungerade Vorwärtsgangstufen des Doppelkupplungsgetriebes beinhaltet. Das erste Teilgetriebe 22 weist eine Mehrzahl von Schaltkupplungen zum Ein- und Auslegen dieser Gangstufen auf, von denen eine in Fig. 1 schematisch bei 24 dargestellt ist. Ein Ausgang des ersten Teilgetriebes 22 ist mit dem Differential 16 verbunden. Die erste Reibkupplung 20 und das erste Teilgetriebe 22 bilden einen ersten Leistungsübertragungspfad 26.

Das Doppelkupplungsgetriebe 14 weist ferner eine zweite Reibkupplung 30 (K2) auf, deren Eingangsglied ebenfalls mit der ersten Antriebseinheit 12 drehgekoppelt ist. Ein Ausgangsglied der zweiten Reibkupplung 30 ist mit einem Eingang eines zweiten Teilgetriebes 32 verbunden, das den geraden Vorwärtsgangstufen des Doppelkupplungsgetriebes 14 zugeordnet ist, vorliegend auch einer Rückwärtsgangstufe R.

Das zweite Teilgetriebe 32 weist eine Mehrzahl von Schaltkupplungen zum Ein- und Auslegen dieser Gangstufen auf, von denen eine in Fig. 1 schematisch bei 34 angedeutet ist. Die zweite Reibkupplung 30 und das zweite Teilgetriebe 32 bilden einen zweiten Leistungsübertragungspfad 36 des Doppelkupplungsgetriebes 14.

Der Hybrid-Antriebsstrang beinhaltet ferner eine zweite Antriebseinheit in Form einer elektrischen Maschine 40. Die elektrische Maschine 40 ist mit einer Batterie 42 verbunden, aus der elektrische Leistung zum Bereitstellen von Antriebsleistung entnommen werden kann (im Motorbetrieb der elektrischen Maschine 40), und in die in einem Generatormodus der elektrischen Maschine 40 elektrische Leistung eingespeist werden kann.

Die elektrische Maschine 40 ist mit dem Ausgangsglied der zweiten Reibkupplung 30 bzw. einem Eingang des zweiten Teilgetriebes 32 gekoppelt. Dies kann eine feste Drehkopplung sein, kann jedoch auch eine Kopplung über eine Maschinenkupplung 44 sein, wie es in Fig. 1 schematisch angedeutet ist.

Der Hybrid-Antriebsstrang 10 ist dazu ausgelegt, dass der Verbrennungsmotor 12 mittels der elektrischen Maschine 14 gestartet werden kann. Hierzu werden die Schaltkupplungen 34 geöffnet, die zweite Reibkupplung 30 wird geschlossen und die erste Reibkupplung 20 wird geöffnet. Zusätzlich hierzu ist es jedoch auch möglich, für das Anlassen des Verbrennungsmotors 12 einen separaten elektrischen Anlassermotor 46 bereitzustellen.

Zum Betätigen der unterschiedlichen Komponenten des Hybrid-Antriebsstranges ist in schematischer Form eine Aktuatorik 48 vorgesehen, die mittels einer ebenfalls schematisch angedeuteten Steuereinrichtung 49 angesteuert wird. Die Aktuatorik 48 kann zumindest teilweise hydraulisch und/oder zumindest teilweise elektrisch ausgeführt sein.

Der Hybrid-Antriebsstrang 10 ermöglicht einen rein verbrennungsmotorischen Fahrbetrieb, bei dem Gangwechsel ohne Zugkraftunterbrechung durch überschneidende Betätigung der zwei Reibkupplungen 20, 30 erfolgen können. Ferner ermöglicht der Hybrid-Antriebsstrang 10 einen rein elektromotorischen Fahrbetrieb, bei dem die zweite Reibkupplung 30 geöffnet ist und der Verbrennungsmotor 12 stillsteht. Die erste Reibkupplung 20 ist in diesem Fall vorzugsweise ebenfalls geöffnet. Gangwechsel in dem rein elektromotorischen Fahrbetrieb können durch Gangwechsel in dem zweiten Teilgetriebe 32 erfolgen, jedoch mit Zugkraftunterbrechung.

Ferner ist ein Boost-Fahrbetrieb möglich, wie es in Fig. 1 angedeutet ist. Hierbei wird Antriebsleistung von der ersten Antriebseinheit 12 bereitgestellt und über die erste Reibkupplung 20, die zu diesem Zweck geschlossen ist (C, Closed), und das erste Teilgetriebe 22 auf den Abtrieb bzw. das Differential 16 übertragen. Parallel hierzu wird Antriebsleistung der zweiten Antriebseinheit 40 über das zweite Teilgetriebe 32 auf den Abtrieb bzw. das Differential 16 übertragen. Die zweite Reibkupplung 30 ist in diesem Fall vorzugsweise geöffnet (O, Open). Die Antriebsleistungen des Verbrennungsmotors 12 und der elektrischen Maschine 14 summieren sich am Ausgang des Doppelkupplungsgetriebes 14 und werden als summierte Antriebsleistung auf den Abtrieb geführt.

Es versteht sich, dass mit dem Hybrid-Antriebsstrang 10 auch ein Rekuperieren möglich ist, sowie ein Standladen und ein Anlassen des Verbrennungsmotors mittels der elektrischen Maschine 40.

Ein Hybrid-Antriebsstrang 10 der oben bezeichneten Art ist generell bekannt aus dem Dokument DE 10 2012 018 416 A1, auf dessen Inhalt vorliegend vollumfänglich Bezug genommen wird.

Um mittels des Hybrid-Antriebsstranges einen längeren Beschleunigungsvorgang unter Bereitstellung von einer möglichst hohen Leistung durchzuführen, wird der Hybrid-Antriebsstrang vorzugsweise betrieben, wie es nachstehend beschrieben ist. Der Beschleunigungsvorgang geht dabei aus von einem Zustand, bei dem ein Boost-Betrieb eingerichtet ist, beispielsweise derart, wie es in Fig. 1 gezeigt ist. Hierbei wird erste Antriebsleistung von der ersten Antriebseinheit 12 bereitgestellt und über die erste Reibkupplung 20 und das erste Teilgetriebe 22 auf den Abtrieb übertragen. Parallel hierzu wird zweite Antriebsleistung mittels der zweiten Antriebseinheit 40 bereitgestellt und über das zweite Teilgetriebe 32 auf den Abtrieb übertragen.

In Fig. 1 ist dabei ein Zustand gezeigt, bei dem die Beschleunigung in einem unteren bzw. mittleren Geschwindigkeitsbereich erfolgt, also beispielsweise bei einem Einfädeln auf eine Beschleunigungsspur einer Autobahn oder eines Highways, wobei anschließend das Fahrpedal beispielsweise weitgehend vollständig durchgedrückt wird, um das Fahrzeug möglichst schnell auf eine für die Autobahn angemessene Geschwindigkeit zu beschleunigen.

Wenn sich die Beschleunigung nur bis auf eine Geschwindigkeit erfolgt, die kleiner ist als die maximale Geschwindigkeit, die in der Vorwärtsgangstufe 2 erreicht werden kann, muss das erfindungsgemäße Verfahren nicht notwendigerweise durchgeführt werden. Falls jedoch prädiktiv erkannt bzw. ermittelt wird, dass der eingeleitete Beschleunigungsvorgang möglicherweise oder mit einer hohen Wahrscheinlichkeit dazu führt, dass die Beschleunigung in einen Geschwindigkeitsbereich hinein erfolgen wird, der höher als die maximal in der Vorwärtsgangstufe 2 erreichbare Geschwindigkeit, wird festgestellt, dass für den Beschleunigungsvorgang und den dabei eingerichteten Boost-Betrieb ein Gangstufenwechsel in dem zweiten Teilgetriebe 32 notwendig sein wird. In Fig. 1 ist in dem ersten Teilgetriebe 22 die Vorwärtsgangstufe 3 eingelegt. In dem zweiten Teilgetriebe 32 ist dabei vorläufig noch die Vorwärtsgangstufe 2 eingelegt. Die Vorwärtsgangstufe 3 ist bei dieser Ausgangssituation folglich eine erste Verbrenner-Gangstufe. Die Vorwärtsgangstufe 2 ist bei dieser Ausgangssituation eine erste Elektro-Gangstufe.

Zum Durchführen des Gangwechsels in dem zweiten Teilgetriebe wird nicht, wie im Stand der Technik, einfach die Leistung der elektrischen Maschine 40 komplett heruntergefahren und dann in die zweite höhere Elektro-Gangstufe geschaltet, d.h. die Anschlussgangstufe 4. Denn dies würde zu einem erheblichen Zugkrafteinbruch während des Beschleunigungsvorganges führen.

Stattdessen wird folgendermaßen vorgegangen. Zum einen wird zunächst in dem ersten Teilgetriebe 22 von der ersten Verbrenner-Gangstufe 3, die niedriger ist als die zweite Elektro-Gangstufe 4, in eine zweite Verbrenner-Gangstufe 5 geschaltet, die höher ist als die zweite Elektro-Gangstufe 4. Ferner wird das zweite Teilgetriebe in Neutral geschaltet, und es wird Antriebsleistung von der zweiten Antriebseinheit 40 über die zweite Reibkupplung 30 und die erste Reibkupplung 20 sowie über das erste Teilgetriebe 22 zu dem Abtrieb 16 übertragen, um einen Zugkrafteinbruch zu vermeiden bzw. einen Boost-Betrieb fortzusetzen. Dies ist in Fig. 2 dargestellt. Hier ist in dem zweiten Teilgetriebe 32 bereits der Neutralzustand eingerichtet (O bei 34). Ferner ist die zweite Reibkupplung 30 geschlossen (C), und die erste Reibkupplung 20 ist ebenfalls geschlossen (C), und es wird Antriebsleistung von der zweiten Antriebseinheit 40 über die zweite Reibkupplung 30, die erste Reibkupplung 20 und das erste Teilgetriebe 22 auf den Abtrieb übertragen, gemeinsam mit Antriebsleistung von der ersten Antriebseinheit 12, und zwar über die in dem ersten Teilgetriebe bereits eingelegte zweite Verbrenner-Gangstufe 5.

In dem zweiten Teilgetriebe 32 wird dann die zweite Elektro-Gangstufe geschaltet (Vorwärtsgangstufe 4), und anschließend kann die zweite Reibkupplung 30 wieder geöffnet (O) werden, was in Fig. 3 gezeigt ist. Folglich wird der Boost-Betrieb bei dem Beschleunigungsvorgang nun fortgesetzt, derart, dass Antriebsleistung der ersten Antriebseinheit 12 nach wie vor über die erste Reibkupplung 20 und das erste Teilgetriebe 22 zu dem Abtrieb übertragen wird, hier in der zweiten Verbrenner-Gangstufe 5. Ferner wird parallel Antriebsleistung von der zweiten Antriebseinheit 40 über das zweite Teilgetriebe 32 auf den Abtrieb übertragen, hier über die zweite Elektro-Gangstufe 4. Ausgehend von diesem Zustand kann dann ggf. wieder in dem ersten Teilgetriebe die erste Verbrenner-Gangstufe 3 eingelegt werden, um die Zugkraft während des Beschleunigungsvorganges noch einmal zu erhöhen.

Der gesamte Schaltvorgang kann in einer sehr kurzen Zeit durchgeführt werden, in der Regel kleiner als eine Sekunde.

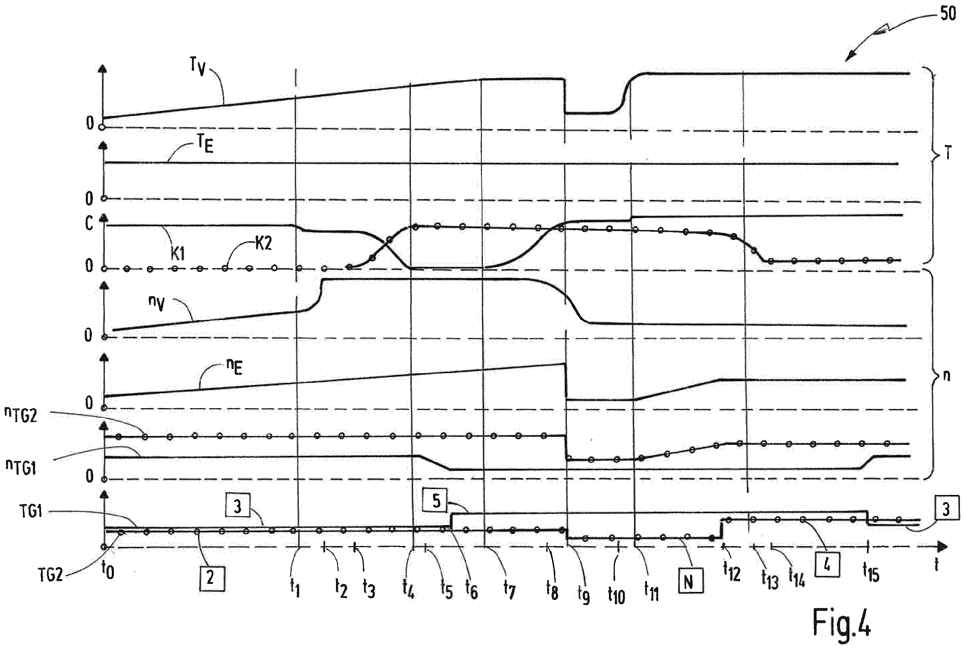

Nachstehend wird ein solches Verfahren anhand der Fig. 4 erläutert, bei der es sich um ein Zeitablaufdiagramm 50 handelt, das den zeitlichen Verlauf während dieses Verfahrens von folgenden Zustandsgrößen zeigt:
- T_{V}: von der ersten Antriebseinheit 12 bereitgestelltes Drehmoment
- T_{E}: von der zweiten Antriebseinheit 40 bereitgestelltes Drehmoment
- K1, K2: Zustand (offen, O, oder geschlossen, C) der Reibkupplungen 20, 30
- n_{V}: Drehzahl der ersten Antriebseinheit 12
- n_{E}: Drehzahl der zweiten Antriebseinheit 40 am Getriebeeingang
- n_{TG1}: Drehzahl des ersten Teilgetriebes 22
- n_{TG2}: Drehzahl des zweiten Teilgetriebes 32
- TG1: Schaltzustand des ersten Teilgetriebes 22
- TG2: Schaltzustand des zweiten Teilgetriebes 32.

Bei der obigen Darstellung sind der Einfachheit halber die Drehzahlen und Drehmomente nicht absolut aufgezeichnet, sondern derart, dass sie gut miteinander verglichen werden können, insbesondere normiert.

Das Verfahren geht aus von dem Zustand, der in Fig. 1 dargestellt ist, und zwar zum Zeitpunkt t₀. In dem ersten Teilgetriebe 22 ist die Gangstufe 3 geschaltet. In dem zweiten Teilgetriebe 32 ist die Gangstufe 2 geschaltet. Die erste Reibkupplung 20 (K1) ist geschlossen (C). Die zweite Reibkupplung 30 (K2) ist geöffnet (O). Von der zweiten Antriebseinheit 40 wird ein konstantes Drehmoment T_{E} bereitgestellt. Von dem Verbrennungsmotor T_{V} wird mit steigender Drehzahl n_{V} ein ansteigendes Drehmoment T_{E} bereitgestellt.

Das Fahrpedal ist zu diesem Zeitpunkt zu einem großen Teil durchgedrückt. Es wird an dieser Stelle prädiktiv ermittelt, dass zur Durchführung des Beschleunigungsvorganges in einen Geschwindigkeitsbereich oberhalb der Vorwärtsgangstufe 2 ein Gangwechsel in dem zweiten Teilgetriebe von der ersten Elektrogangstufe 2 in eine zweite Elektro-Gangstufe 4 erforderlich sein wird.

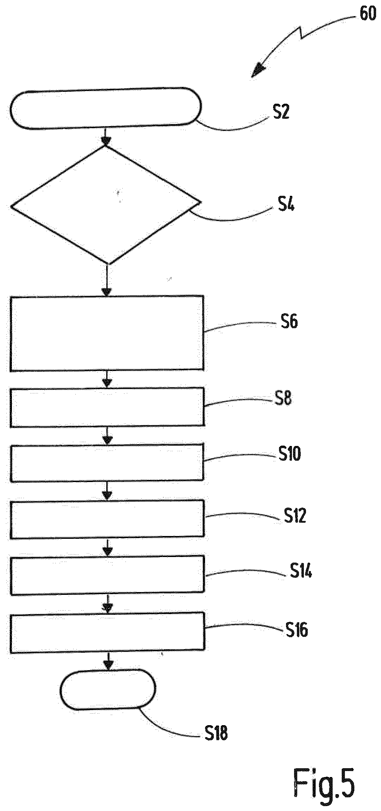

In Fig. 5 ist das Verfahren in Form eines Flussdiagrammes dargestellt. Ausgehend von dem Zeitpunkt t₀ und dem Start des Betreibens des Hybrid-Antriebsstranges bei S2 wird im Schritt S4 prädiktiv festgestellt, dass der Gangwechsel in dem zweiten Teilgetriebe notwendig sein wird. Im folgenden Schritt S6 wird eine Schaltkupplung zum Auslegen der ersten Elektro-Gangstufe in Auslegerichtung vorgespannt.

Diese Entscheidung erfolgt vor einem Zeitpunkt t₁ und führt zu den nachfolgenden Schritten. Zum Zeitpunkt t₁ wird begonnen, die erste Reibkupplung K1 teilweise zu öffnen. Dies führt zu einem Anstieg der Drehzahl n_{V} der ersten Antriebseinheit 12. Hierbei erfolgt eine Drehzahlanpassung der ersten Antriebseinheit 12 an die erste Elektro-Gangstufe 2. Die Anpassung der Drehzahl ist zum Zeitpunkt t₂ erfolgt. Zum Zeitpunkt t₃ wird begonnen, die Reibkupplungen K1, K2 überschneidend zu betätigen, also die Kupplung K1 zu öffnen und die Kupplung K2 zumindest teilweise zu schließen. Dies ist zum Zeitpunkt t₄ beendet. Nun wird Drehmoment der ersten Antriebseinheit 12 über die ggf. teilweise geschlossene zweite Kupplung K2 und das zweite Teilgetriebe 32 übertragen, das sich nach wie vor in der ersten Vorwärts-Gangstufe 2 befindet. In dem ersten Teilgetriebe wird nun die erste Verbrenner-Gangstufe 3 ausgelegt und die zweite Verbrenner-Gangstufe 5 eingelegt, und zwar zum Zeitpunkt t₆, wozu ab dem Zeitpunkt t₅ eine Drehzahlanpassung der Drehzahl n_{TG1} erfolgt.

Antriebsleistung der ersten Antriebseinheit 12 und Antriebsleistung der zweiten Antriebseinheit 40 wird nach wie vor ausschließlich über das zweite Teilgetriebe 32 übertragen. Ferner wird anschließend die erste Reibkupplung K1 wieder geschlossen, wodurch die Drehzahl n_{V} abfällt, und zwar etwa ab t₈. Antriebsleistung fließt ausschließlich über den ersten Leistungsübertragungspfad 26.

Zum Zeitpunkt t₅ wird die Schalteinheit zum Auslegen der ersten Elektro-Gangstufe 2 lastfrei (Schritt S8) und das zweite Teilgetriebe 32 kann in Neutral geschaltet werden. Aufgrund der Vorspannung der Aktuatorik erfolgt dies automatisch, sobald die Lastfreiheit erreicht ist (S10 bzw. t₉). Dieser Zustand ist in Fig. 2 dargestellt.

Die erste Reibkupplung wird anschließend weiter geschlossen (zum Zeitpunkt t₁₀ bzw. S12).

Ab dem Zeitpunkt t₁₁ wird das zweite Teilgetriebe 32 nun beschleunigt (Ansteigen von n_{TG2}), und zwar durch allmähliches Öffnen der zweiten Reibkupplung K2 und das wirkende Drehmoment der zweiten Antriebseinheit 40 (S14).

Sobald an der Schaltkupplung für die zweite Elektro-Gangstufe die Synchrondrehzahl erreicht ist, wird durchgeschaltet, und zwar zum Zeitpunkt t₁₂ bzw. im Schritt S16.

Nach dem Schalten der zweiten Elektro-Gangstufe 4 kann ab dem Zeitpunkt t₁₃ die zweite Reibkupplung K2 wieder vollständig geöffnet werden, was zum Zeitpunkt t₁₄ erreicht ist, so dass wieder ein herkömmlicher Boost-Betrieb eingerichtet werden kann, bei dem Antriebsleistung der zweiten Antriebseinheit 40 ausschließlich über das zweite Teilgetriebe 32 übertragen wird, nun in der zweiten Elektro-Gangstufe 4, und wobei Antriebsleistung der ersten Antriebseinheit 12 über die erste Reibkupplung 20 und das erste Teilgetriebe (in der zweiten Verbrenner-Gangstufe 5) übertragen wird.

Wenn dies gewünscht ist, kann anschließend (Zeitpunkt t₁₅) das erste Teilgetriebe 22 wieder zurück in die erste Verbrenner-Gangstufe 3 geschaltet werden, wie es in Fig. 4 dargestellt ist, um die Zugkraft noch einmal zu erhöhen.

Danach ist das Verfahren insgesamt abgeschlossen (Schritt S18).

Bei dem Verfahren gemäß Fig. 4 wird ab dem Zeitpunkt t₇ die erste Reibkupplung K1 geschlossen. Das Drehmoment wird aufgrund von Schlupf dort übertragen. Das Drehmoment der zweiten Antriebseinheit 40 wird über die zweite Reibkupplung in Richtung hin zur ersten Antriebseinheit 12 (dort wo die niedrigere Drehzahl ist) übertragen. Wenn zum Zeitpunkt t₉ die erste Elektro-Gangstufe ausgelegt wird, erfolgt dies, weil das Drehmoment über die schlupfende zweite Reibkupplung K2 in Richtung zur ersten Antriebseinheit geleitet wird. Das Ziel ist hierbei kein Schlupf an der ersten Reibkupplung und eine niedrigere Drehzahl n_{V} der ersten Antriebseinheit 12 als jene des Zielganges (zweite Elektro-Gangstufe). Wenn dann die zweite Reibkupplung K2 durch allmähliches Öffnen unter das von der zweiten Antriebseinheit 12 bereitgestellte Drehmoment T_{E} gelangt, geht die Drehzahl n_{TG2} des zweiten Teilgetriebes hoch und die zweite Reibkupplung K2 gerät in den Schlupf. Dies erfolgt solange, bis die Zieldrehzahl an der zweiten Elektro-Gangstufe 4 erreicht ist. Hier fließt nun das Drehmoment ebenfalls über die schlupfende zweite Reibkupplung K2 und den ersten Leistungsübertragungspfad 26. Dabei ist die Schaltung für die zweite Elektro-Gangstufe lastfrei und diese Gangstufe kann geschaltet werden.

Das Zurückschalten von der zweiten Verbrenner-Gangstufe 5 in die erste Verbrenner-Gangstufe 3 (zum Zeitpunkt t₁₅) kann auf übliche Art und Weise erfolgen, wie es bei Hybrid-Antriebssträngen dieser Art üblich ist, beispielsweise mit Unterstützung über die zweite Antriebseinheit 40.

## Patentansprüche

1. Verfahren zum Betreiben eines Hybrid-Antriebsstranges (10) eines Kraftfahrzeuges (11), wobei der Hybrid-Antriebsstrang (10) eine erste Antriebseinheit (12), eine zweite Antriebseinheit (40) und ein Doppelkupplungsgetriebe (14) aufweist, wobei das Doppelkupplungsgetriebe (14) einen ersten Leistungsübertragungspfad (26) mit einer ersten Reibkupplung (20) und einem ersten Teilgetriebe (22) sowie einen zweiten Leistungsübertragungspfad (36) mit einer zweiten Reibkupplung (30) und einem zweiten Teilgetriebe (32) aufweist, wobei die erste Antriebseinheit (12) an ein Eingangsglied der ersten Reibkupplung (20) und an ein Eingangsglied der zweiten Reibkupplung (30) gekoppelt ist, und wobei die zweite Antriebseinheit (40) an ein Ausgangsglied der zweiten Reibkupplung (30) gekoppelt ist,
wobei das Verfahren dazu dient, Zugkraft zum Beschleunigen des Kraftfahrzeuges (11) bereitzustellen, und **gekennzeichnet durch** die folgenden Schritte:
- Bereitstellen von erster Antriebsleistung durch die erste Antriebseinheit (12) und Übertragen der ersten Antriebsleistung über die erste Reibkupplung (20) und das erste Teilgetriebe (22) hin zu einem Abtrieb des Hybrid-Antriebsstranges (10), wobei in dem ersten Teilgetriebe (22) eine erste Verbrenner-Gangstufe (3) geschaltet ist, und gleichzeitiges Bereitstellen von zweiter Antriebsleistung durch die zweite Antriebseinheit (40) über das zweite Teilgetriebe (32) hin zu dem Abtrieb (16), wobei die zweite Reibkupplung (30) geöffnet ist und wobei in dem zweiten Teilgetriebe (32) eine erste Elektro-Gangstufe (2) geschaltet ist, die niedriger ist als die erste Verbrenner-Gangstufe (3),
- Ermitteln, ob ein Gangwechsel im zweiten Teilgetriebe (32) von der ersten Elektro-Gangstufe (2) in eine zweite höhere Elektro-Gangstufe (4) erforderlich wird, und, falls ja,
a) Schalten des ersten Teilgetriebes (22) von der ersten Verbrenner-Gangstufe (3) in eine zweite Verbrenner-Gangstufe (5), die höher ist als die erste Verbrenner-Gangstufe (3),
b) Schalten des zweiten Teilgetriebes (32) in Neutral und Übertragen von Antriebsleistung der zweiten Antriebseinheit (40) über die zweite Reibkupplung (30) und die erste Reibkupplung (20) sowie über das erste Teilgetriebe (22) auf den Abtrieb (16), und
c) Schalten des zweiten Teilgetriebes (32) in die zweite Elektro-Gangstufe (4).

2. Verfahren nach Anspruch 1, wobei nach dem Schritt c) das erste Teilgetriebe (22) von der zweiten Verbrenner-Gangstufe (5) in eine niedrigere Verbrenner-Gangstufe (3) geschaltet wird.

3. Verfahren nach Anspruch 1 oder 2, wobei vor dem Schritt a) die erste Reibkupplung (20) zumindest teilweise geöffnet wird und/oder die zweite Reibkupplung (30) zumindest teilweise geschlossen wird.

4. Verfahren nach Anspruch 3, wobei die erste Reibkupplung (20) vor dem Schritt b) wieder zumindest teilweise geschlossen wird, um nach dem Schalten des zweiten Teilgetriebes (32) in Neutral Antriebsleistung der ersten Antriebseinheit (12) über die erste Reibkupplung (20) und das erste Teilgetriebe (22) auf den Abtrieb (16) übertragen zu können.

5. Verfahren nach einem der Ansprüche 1 - 4, wobei die zweite Reibkupplung (30) nach dem Schritt c) geöffnet wird.

6. Verfahren nach einem der Ansprüche 1 - 5, wobei der Schritt c) dadurch unterstützt wird, dass eine Aktuatorik (48) eine Schaltkupplung (34) zum Auslegen der ersten Elektro-Gangstufe (2) in Auslegerichtung vorgespannt, so dass das Auslegen erfolgt, sobald die Schaltkupplung (34) im Wesentlichen lastfrei wird.

7. Hybridantriebsstrang (10) für ein Kraftfahrzeug (11), wobei der Hybridantriebsstrang (10) eine erste Antriebseinheit (12), eine zweite Antriebseinheit (40) und ein Doppelkupplungsgetriebe (14) aufweist, wobei das Doppelkupplungsgetriebe (14) einen ersten Leistungsübertragungspfad (26) mit einer ersten Reibkupplung (20) und einem ersten Teilgetriebe (22) sowie einen zweiten Leistungsübertragungspfad (36) mit einer zweiten Reibkupplung (30) und einem zweiten Teilgetriebe (32) aufweist, wobei die erste Antriebseinheit (12) an ein Eingangsglied der ersten Reibkupplung (20) und an ein Eingangsglied der zweiten Reibkupplung (30) gekoppelt ist, und wobei die zweite Antriebseinheit (40) an ein Ausgangsglied der zweiten Reibkupplung (30) gekoppelt ist, und
wobei der Hybridantriebsstrang (10) eine Steuereinrichtung (49) aufweist, die dazu eingerichtet ist, das Verfahren nach einem der Ansprüche 1 - 6 durchzuführen.

## Claims

1. Method for operating a hybrid drive train (10) of a motor vehicle (11), the hybrid drive train (10) having a first drive unit (12), a second drive unit (40) and a double clutch transmission (14), the double clutch transmission (14) having a first power transmission path (26) with a first friction clutch (20) and a first component transmission (22), and a second power transmission path (36) with a second friction clutch (30) and a second component transmission (32), the first drive unit (12) being coupled to an input member of the first friction clutch (20) and to an input member of the second friction clutch (30), and the second drive unit (40) being coupled to an output member of the second friction clutch (30), the method serving to provide tractive power for accelerating the motor vehicle (11), and **characterized by** the following steps:
- providing of first drive power by way of the first drive unit (12), and transmitting of the first drive power via the first friction clutch (20) and the first component transmission (22) towards an output of the hybrid drive train (10), a first combustion gear stage (3) being shifted in the first component transmission (22), and simultaneous providing of second drive power by way of the second drive unit (40) via the second component transmission (32) towards the output (16), the second friction clutch (30) being open, and a first electric gear stage (2) being shifted in the second component transmission (32), which first electric gear stage (2) is lower than the first combustion gear stage (3),
- determining whether a gear change is required in the second component transmission (32) from the first electric gear stage (2) into a second higher electric gear stage (4), and, if yes,
a) shifting of the first component transmission (22) from the first combustion gear stage (3) into a second combustion gear stage (5) which is higher than the first combustion gear stage (3),
b) shifting of the second component transmission (32) into neutral, and transmitting of drive power of the second drive unit (40) via the second friction clutch (30) and the first friction clutch (20) and via the first component transmission (22) to the output (16), and
c) shifting of the second component transmission (32) into the second electric gear stage (4).

2. Method according to Claim 1, the first component transmission (22) being shifted from the second combustion gear stage (5) into a lower combustion gear stage (3) after step c).

3. Method according to Claim 1 or 2, the first friction clutch (20) being opened at least partially and/or the second friction clutch (30) being closed at least partially before step a).

4. Method according to Claim 3, the first friction clutch (20) being closed at least partially again before step b), in order for it to be possible, after the shifting of the second component transmission (32) into neutral, for drive power of the first drive unit (12) to be transmitted via the first friction clutch (20) and the first component transmission (22) to the output (16).

5. Method according to one of Claims 1 to 4, the second friction clutch (30) being opened after step c).

6. Method according to one of Claims 1 to 5, step c) being assisted by virtue of the fact that an actuator system (48) prestresses a shifting clutch (34) for disengaging the first electric gear stage (2) in the disengaging direction, with the result that the disengaging takes place as soon as the shifting clutch (34) becomes substantially load-free.

7. Hybrid drive train (10) for a motor vehicle (11), the hybrid drive train (10) having a first drive unit (12), a second drive unit (40) and a double clutch transmission (14), the double clutch transmission (14) having a first power transmission path (26) with a first friction clutch (20) and a first component transmission (22), and a second power transmission path (36) with a second friction clutch (30) and a second component transmission (32), the first drive unit (12) being coupled to an input member of the first friction clutch (20) and to an input member of the second friction clutch (30), and the second drive unit (40) being coupled to an output member of the second friction clutch (30), and
the hybrid drive train (10) having a control device (49) which is set up to carry out the method according to one of Claims 1 to 6.

## Revendications

1. Procédé pour faire fonctionner un groupe motopropulseur hybride (10) d'un véhicule automobile (11), le groupe motopropulseur hybride (10) possédant une première unité de propulsion (12), une deuxième unité de propulsion (40) et une boîte de vitesses à double embrayage (14), la boîte de vitesses à double embrayage (14) possédant un premier trajet de transmission de puissance (26) comprenant un premier accouplement à friction (20) et une première boîte de vitesses partielle (22) ainsi qu'un deuxième trajet de transmission de puissance (36) comprenant un deuxième accouplement à friction (30) et une deuxième boîte de vitesses partielle (32), la première unité de propulsion (12) étant couplé à un organe d'entrée du premier accouplement à friction (20) et à un organe d'entrée du deuxième accouplement à friction (30), et la deuxième unité de propulsion (40) étant couplée à un organe de sortie du deuxième accouplement à friction (30),
le procédé servant à fournir une force de traction destinée à accélérer le véhicule automobile (11) et étant **caractérisé par** les étapes suivantes :
- fourniture d'une première puissance motrice par la première unité de propulsion (12) et transmission de la première puissance motrice par le biais du premier accouplement à friction (20) et de la première boîte de vitesses partielle (22) vers un côté mené du groupe motopropulseur hybride (10), un premier rapport de moteur à combustion (3) étant engagé dans la première boîte de vitesses partielle (22), et simultanément fourniture d'une deuxième puissance motrice par la deuxième unité de propulsion (40) par le biais de la deuxième boîte de vitesses partielle (32) vers le côté mené (16), le deuxième accouplement à friction (30) étant ouvert et un premier rapport de groupe électrique (2) étant engagé dans la deuxième boîte de vitesses partielle (32), lequel est inférieur au premier rapport de moteur à combustion (3),
- détermination du fait de savoir si un changement de rapport dans la deuxième boîte de vitesses partielle (32) du premier rapport de groupe électrique (2) à un deuxième rapport de groupe électrique (4) plus élevé devient nécessaire et, dans l'affirmative,
a) changement de rapport de la première boîte de vitesses partielle (22) du premier rapport de moteur à combustion (3) à un deuxième rapport de moteur à combustion (5) qui est supérieur au premier rapport de moteur à combustion (3),
b) changement de rapport de la deuxième boîte de vitesses partielle (32) au neutre et transmission de la puissance motrice de la deuxième unité de propulsion (40) sur le côté mené (16) par le biais du deuxième accouplement à friction (30) et du premier accouplement à friction (20) ainsi que par le biais de la première boîte de vitesses partielle (22), et
c) changement de rapport de la deuxième boîte de vitesses partielle (32) dans le deuxième rapport de groupe électrique (4).

2. Procédé selon la revendication 1, selon lequel, après l'étape c), un changement de rapport est effectué dans la première boîte de vitesses partielle (22) du deuxième rapport de moteur à combustion (5) à un rapport de moteur à combustion (3) inférieur.

3. Procédé selon la revendication 1 ou 2, selon lequel, avant l'étape a), le premier accouplement à friction (20) est au moins partiellement ouvert et/ou le deuxième accouplement à friction (30) est au moins partiellement fermé.

4. Procédé selon la revendication 3, le premier accouplement à friction (20) étant au moins partiellement fermé avant l'étape b) afin de pouvoir, après le changement de rapport de la deuxième boîte de vitesses partielle (32) au neutre, transmettre la puissance motrice de la première unité de propulsion (12) au côté mené (16) par le biais du premier accouplement à friction (20) et de la première boîte de vitesses partielle (22).

5. Procédé selon l'une des revendications 1 à 4, le deuxième accouplement à friction (30) étant ouvert après l'étape c).

6. Procédé selon l'une des revendications 1 à 5, l'étape c) étant assistée par le fait qu'un système d'actionnement (48) précontraint un embrayage (34) dans la direction du désengagement en vue de désengager le premier rapport de groupe électrique (2), de sorte que le désengagement a lieu dès que l'embrayage (34) est sensiblement hors charge.

7. Groupe motopropulseur hybride (10) pour un véhicule automobile (11), le groupe motopropulseur hybride (10) possédant une première unité de propulsion (12), une deuxième unité de propulsion (40) et une boîte de vitesses à double embrayage (14), la boîte de vitesses à double embrayage (14) possédant un premier trajet de transmission de puissance (26) comprenant un premier accouplement à friction (20) et une première boîte de vitesses partielle (22) ainsi qu'un deuxième trajet de transmission de puissance (36) comprenant un deuxième accouplement à friction (30) et une deuxième boîte de vitesses partielle (32), la première unité de propulsion (12) étant couplée à un organe d'entrée du premier accouplement à friction (20) et à un organe d'entrée du deuxième accouplement à friction (30), et la deuxième unité de propulsion (40) étant couplée à un organe de sortie du deuxième accouplement à friction (30), et
le groupe motopropulseur hybride (10) possédant un dispositif de commande (49) qui est conçu pour mettre en œuvre le procédé selon l'une des revendications 1 à 6.
